# EUROPÄISCHE PATENTANMELDUNG

(11) **EP 1 746 544 A1**
(43) Veröffentlichungstag der Anmeldung: **24.01.2007**
(21) Anmeldenummer: 05106179.4
(22) Anmeldetag: 07.07.2005
(51) Int. Cl.: G07C 5/00, F16H 61/12

(54) **Verfahren zur Fehlerbehandlung**

(71) Anmelder: Ford Global Technologies, LLC, Dearborn, MI 48126 (US)
(72) Erfinder: Geffers, Peter, 50259, Pulheim (DE); Norrenberg, Ralf, 50765, Köln (DE)
(74) Vertreter: Dörfler, Thomas

(57) **Zusammenfassung**

Die Erfindung betrifft ein Verfahren zur Fehlerbehandlung in einem elektronischen Fahrzeugsteuersystem, insbesondere in einem Kraftfahrzeugautomatikgetriebe, mittels einer Onboard-Diagnoseeinrichtung, in der Istwerte von Sensoren mit Sollwerten verglichen werden, und beim Abweichen der Ist- von den Sollwerten über einen vorgegebenen Zeitraum hinaus ein Fehler angenommen wird, woraufhin Ersatzfunktionen aktiviert und/oder die Sensoren durch Ersatzsensoren ersetzt und/oder Ersatzwerte berechnet werden und in einem Fehlerspeicher Fehlerdetails abgespeichert werden sowie eine Warnung ausgegeben wird. Um erst eine Warnung an den Fahrer auszugeben, wenn der Fehler tatsächlich relevant ist und persistent auftritt, ist vorgesehen, dass der auftretende Fehler vor dem Ausgeben der Warnung desensibilisiert wird.

## Beschreibung

Die Erfindung betrifft ein Verfahren zur Fehlerbehandlung in einem elektronischen Fahrzeugsteuersystem, insbesondere in einem Kraftfahrzeugautomatikgetriebe, mittels einer Onboard-Diagnoseeinrichtung, in der lstwerte von Sensoren mit Sollwerten verglichen werden, und beim Abweichen der lst- von den Sollwerten über einen vorgegebenen Zeitraum hinaus ein Fehler angenommen wird, woraufhin Ersatzfunktionen aktiviert und/oder die Sensoren durch Ersatzsensoren ersetzt und/oder Ersatzwerte berechnet werden und in einem Fehlerspeicher Fehlerdetails abgespeichert werden sowie eine Warnung ausgegeben wird.

Derartige Verfahren sind grundsätzlich bekannt. So ist es z. B. bei Automatikgetrieben von Kraftfahrzeugen üblich mittels einer Vielzahl von Sensoren und Signalen den Betrieb des Getriebes zu überwachen. Treten dabei Fehler auf, so schaltet sich das so genannte "Fehler Management" ein.

Üblicherweise werden die Istwerte der Signale von den Sensoren mit Sollwerten verglichen. Wenn die Istwerte dabei über eine bestimmte Zeitdauer von den Sollwerten abweichen, wird ein Fehler angenommen und daraufhin eine Ersatzfunktion aktiviert, so dass das Getriebe vor einer Beschädigung geschützt und für das Fahrzeug ein sicherer Fahrzustand erreicht wird. Zusätzlich können z. B. ungenaue oder fehlerhafte Sensorwerte, wie z. B. Drehzahlwerte, durch andere Größen ersetzt bzw. ein Ersatzwert berechnet werden. Nach der Annahme eines Fehlers wird eine Warnung an den Fahrer ausgegeben, dass eine Werkstatt zur Behebung der Fehlfunktion aufzusuchen ist.

Allerdings kommt es durch Einsatz vielfältiger elektronischer Systeme in modernen Fahrzeugen häufig zu nicht reproduzierbaren Fehlern oder kurzzeitigen nicht relevanten Fehlern, die in der Werkstatt nicht nachvollzogen werden können oder deren Ursache, .z. B. die temporäre Verschmutzung eines Sensors, nicht mehr besteht. So können die Sensoren durch einmalige Verschmutzungen Fehler andeuten, die eigentlich nicht vorhanden sind. Auch kurzzeitige Aussetzer, wie temporäre Wackelkontakte führen zur Anzeige von Fehlern, die bei der Überprüfung in einer Werkstatt nicht mehr vorliegen.

Das nicht notwendige und/oder nicht erfolgreiche Aufsuchen der Werkstätten führt zu einer hohen Kundenunzufriedenheit und/oder kann Kunden verunsichern.

Demgegenüber besteht die Aufgabe der Erfindung darin, ein Verfahren anzugeben, bei dem die Fehlerbehandlung tolerant ist, d. h. erst eine Warnung an den Fahrer ausgegeben wird, wenn der Fehler tatsächlich relevant ist und persistent auftritt.

Diese Aufgabe wird durch die Merkmale des Anspruchs 1 gelöst.

Da das Verfahren zur Fehlerbehandlung in einem elektronischen Fahrzeugsteuersystem, insbesondere in einem Kraftfahrzeugautomatikgetriebe, mittels einer Onboard-Diagnoseeinrichtung, in der Istwerte von Sensoren mit Sollwerten verglichen werden, und beim Abweichen der Ist- von den Sollwerten über einen vorgegebenen Zeitraum hinaus ein Fehler angenommen wird, woraufhin Ersatzfunktionen aktiviert und/oder die Sensoren durch Ersatzssignale ersetzt und/oder Ersatzwerte berechnet werden und in einem Fehlerspeicher Fehlerdetails abgespeichert werden sowie eine Warnung ausgegeben wird, vor dem Ausgeben der Warnung den auftretenden Fehler desensibilisiert, ist es möglich, das Fehlerbehandlung bzw. Überwachung der Sensoren tolerant auszugestalten, so dass einmalige oder temporäre nicht relevante Fehler nicht zu einer Warnung führen.

Unabhängig davon kann bzw. muß - je nach Relevanz des Fehlers - eine Fehlerreaktion fahrzeugintern trotzdem ausgeführt werden um Fahrzeugkomponenten, z. B. das Getriebe oder den Motor, zu schützen.

Nach einer Ausführungsform der Erfindung wird der auftretende Fehler also zur Desensibilisierung gefiltert, so dass nur bei einem tatsächlich relevanten Fehler eine Warnung ausgegeben wird. Dies bedeutet, daß eine Fehlerreaktion zwar stattfindet, dies aber nicht zwangsläufig zu einem Aufleuchten der Warnlampe führt.

Vorzugsweise wird der Fehler anhand der Fehlerdetails gefiltert. Hierzu werden insbesondere die Art des Fehlers (Fehlercode), die Dauer des Auftretens, die Weg- bzw. Fahrtstrecke, in der der Fehler vorlag, und die Häufigkeit des Auftretens verwendet.

Hierzu kann der Fehler z. B. anhand der Zeitdauer gefiltert werden, in der der Fehler auftrat, oder er kann anhand der Wegstrecke gefiltert werden, in der er auftrat. Ferner kann der Fehler anhand der Anzahl des Auftretens gefiltert werden.

So könnte vorgesehen sein, dass ein bestimmter Fehler im Getriebe erst nach einer Fahrstrecke von z. B. 5 KM als relevant anzusehen ist, wenn er über diese Strecke ständig auftrat. Entsprechende Einstellungen können bezüglich der Zeitdauer des Auftretens oder der Anzahl des Auftretens vorgesehen sein. Auch die Verwendung weiterer Parameter, wie das parallele Auftreten anderer Fehler ist denkbar.

Natürlich ist auch die Verwendung von Kombinationen der vorgegebenen Parameter bzw. Fehlerdetails denkbar. Sinnvollerweise sind für jeden Fehler unterschiedliche Parameter und Kombinationen vorgesehen bzw. hinterlegt.

Nach einer weiteren Ausführungsform wird der aufgetretene Fehler nach dem Ausgeben der Warnung überwacht und zur Überwachung anhand der Fehlerdetails derart kontrolliert bzw. gefiltert, dass die Warnung erst zurückgenommen wird, wenn bestimmte Bedingungen erfüllt sind. So ist es möglich, Fehler wie z. B. Verschmutzungen, die sich allmählich lösen, oder die durch Verschiebung von Betriebspunkten verursacht sind, zu erfassen und auf ihre Relevanz hin zu überwachen. Sollte der Fehler also z. B. nach einer gewissen Zeit nicht mehr vorliegen und auch nicht wieder auftreten nachdem die Warnung ausgegeben wurde, so kann die Warnung rückgängig gemacht bzw. deaktiviert werden.

Auch hierbei kann der Fehler anhand der Fehlerdetails, wie z. B. der Wegstrecke, gefiltert werden, in der die Anzahl des Auftretens des Fehlers nicht erhöht wurde, und/oder anhand der Zeitdauer gefiltert werden, in der die Anzahl des Auftretens des Fehlers nicht erhöht wurde.

Die Fehlerreaktion des Fehlers kann ebenfalls deaktiviert werden, wenn in einer vorgegebenen Zeitdauer und/oder über eine vorgegebene Wegstrecke kein erneuter Fehler auftrat. Entsprechendes gilt, wenn über eine vorgegebene Wegstrecke und/oder Zeitdauer die Anzahl des Auftretens des Fehlers nicht erhöht wurde. Somit wird das Fahrzeugsystem nicht ständig durch die Fehlerreaktion belastet.

Daneben ist es sinnvoll, wenn die Desensibilisierung beim Fahrzeugstart deaktiviert und beim erstmaligen Auftreten eines Fehlers aktiviert wird. So kommt sie nur bei tatsächlichem Bedarf zur Anwendung und spart Ressourcen.

Zudem sollte die Desensibilisierungsstrategie bei der Deaktivierung bzw. dem Ausschalten der Warnung zurückgesetzt werden, d. h. die überwachten Fehlerdetails auf ihre Ausgangsgrößen, d. h. im Zweifel auf Null gesetzt werden.

Vorzugsweise werden die Parameter für die Desensibilisierung bzw. Filterung tabellarisch und fehlerabhängig abgelegt. So sind für jeden unterschiedlichen Fehler unterschiedliche Vorgabewerte für die Fehlerdetails, insbesondere Weg, Dauer und Anzahl (vgl. oben) vorgesehen. Auf diese kann dann in einfacher Weise zurückgegriffen werden, um die jeweilige Desensibilisierung bzw. Überwachung durchzuführen.

Wichtig ist bei dem erfindungsgemäßen Verfahren, dass keine abgasrelevanten Fehlern desensibilisiert werden. Dies könnte zum einen zu Schäden am Fahrzeug und/oder zur Gefährdung der Insassen führen. Außerdem bestehen gesetzliche Vorschriften bezüglich der Aktivierung der Warnungen bei abgasrelevanten Fehlern, die von daher nicht abgeändert werden dürfen und die sich je nach Region oder Land unterscheiden.

Das erfindungsgemäße Verfahren wird in aller Regel in Form einer Software zur Ansteuerung einer mikroprozessorgesteuerten Schaltung eingesetzt werden. Denkbar ist es jedoch auch die entsprechende Logik fest zu verdrahten, d. h. etwa mit Hilfe von ASIC's oder Ähnlichem als Hardware auszugestalten. Weiterhin kann das erfindungsgemäße Verfahren bei allen elektronischen Fahrzeugsteuersystemen eingesetzt werden, z. B. von automatischen Getrieben, Motoren, Klimaanlagen, Sicherheitseinrichtungen (Airbags etc.).

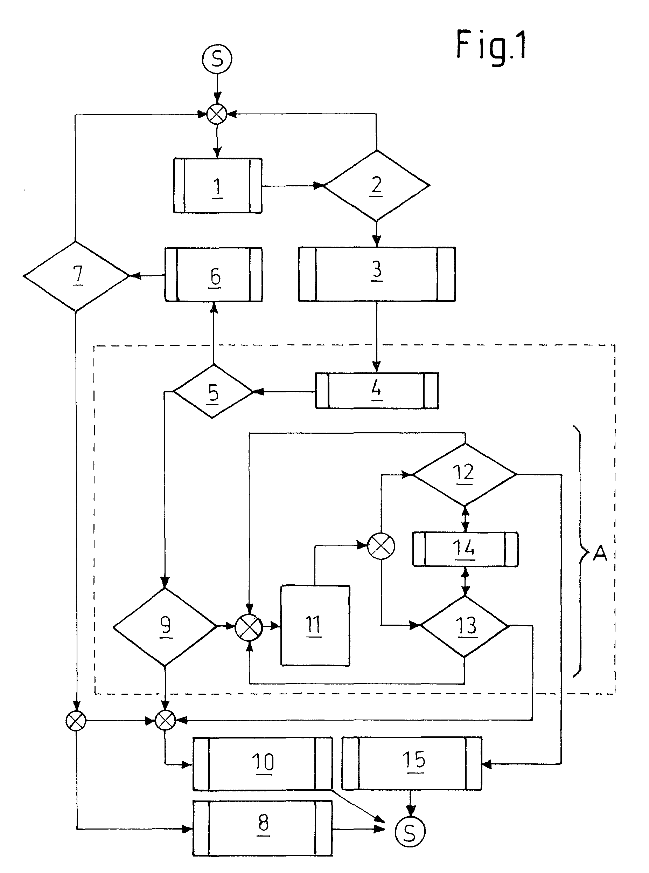

Weitere Merkmale, Einzelheiten und Vorteile der Erfindung ergeben sich aus der nachfolgenden Beschreibung eines Ausführungsbeispieles anhand der Zeichnung.

Die einzige Figur zeigt ein schematisches Ablaufdiagramm des erfindungsgemäßen Verfahrens zur Fehlerbehandlung in einem elektronischen Steuersystem eines Kraftfahrzeugautomatikgetriebes mittels einer Onboard-Diagnoseeinrichtung.

In der Diagnoseroutine 1 werden alle diagnostizierbaren überwachten Teile, Sensoren und Aktoren überprüft, wobei gemessene Istwerte mit vorgegebenen Sollwerten verglichen werden.

Aufgrund eines Abweichens der Ist- von den Sollwerten über einen vorgegebenen Zeitraum hinaus entscheidet der Diagnosefilter 2, ob ein Fehler wirklich vorliegt und gibt entsprechend ein Signal an das Fehlermanagementmodul 3 weiter, das die Fehlerbehandlung aktiviert.

Im Modul 3 wird eine Abspeicherung des Fehlercodes des Fehlers und ggf. weiterer Details des Fehlers durchgeführt. Daneben können Ersatzfunktionen aktiviert und/oder die Sensoren durch Ersatzsensoren ersetzt und/oder Ersatzwerte berechnet werden.

Ferner wird ein Signal für die Fahrerwarnlampe 10 gesetzt.

Allerdings wird das Signal für die Fahrerwarnlampe 10 nicht sofort weitergegeben, sondern desensibilisiert bzw. gefiltert.

Dazu wird zunächst der jeweilige Fehlerzähler C in der Routine 4 inkrementiert. Tritt der Fehler also erstmalig auf, erhält C z. B. den Wert 1. Nach dem X-ten Auftreten hätte C dann den Wert X.

Anschließend wird (bei 5) Überprüft, ob es sich um einen abgasrelevanten Fehler handelt. Ist dies der Fall, so wird (bei 6) eine abgasrelevante Fehlerdiagnose durchgeführt. Liegt tatsächlich ein abgasrelevanter Fehler vor, so werden die entsprechende Fehlerlampe 8 und die Warnlampe 10 zum Leuchten angesteuert, so dass der Fahrer Kenntnis von dem Fehler erlangt und eine Werkstatt aufsucht. Sollte in der abgasrelevanten Fehlerdiagnose 6 bzw. 7 festgestellt werden, dass der Fehler nicht aktiv ist, so springt das Verfahren zurück zum Startpunkt S bzw. zur Diagnose 1 und beginnt von neuem. Diese Prüfung verhindert, dass die abgasrelevanten Fehler desensibilisiert werden.

Liegt (bei 5) kein abgasrelevanter Fehler vor, so wird anschließend (bei 9) geprüft, ob es sich um einen kritischen Fehler handelt, der zu Schäden am Fahrzeug oder zur Gefährdung der Insassen führen könnte und daher nicht desensibilisiert werden darf. Liegt tatsächlich ein kritischer Fehler vor, so wird die entsprechende Warnlampe 10 erleuchtet, so dass der Fahrer Kenntnis von dem Fehler erlangt und eine Werkstatt aufsucht. Das Verfahren springt dann wieder an den Startpunkt S und läuft weiter bzw. beginnt erneut. Diese Prüfung verhindert, dass die kritischen Fehler desensibilisiert werden.

Wird in der Prüfroutine 9 festgestellt, dass kein kritischer Fehler vorliegt, so kann die eigentliche Desensibilisierung (Schleife A) durchgeführt werden.

Dazu werden nun in einer Schleife A der jeweilige Fehler und seine Fehlerdetails ständig überwacht und derart gefiltert, dass nur bei einer tatsächlichen Relevanz des Fehlers eine Warnung über die Warnlampe 10 ausgegeben wird. Daneben entscheidet sich auch in der Schleife A, ob diese Fehlerbehandlung weitergeführt werden muss oder ob diese deaktiviert bzw. zurückgesetzt werden kann.

In der Schleife A wird zunächst in einer Routine 11 die seit dem Auftreten und dem Vorliegen des Fehlers gefahrene Strecke D aufgezeichnet. Auch die entsprechende Zeit T, in der der Fehler vorlag, wird in der Routine 11 überwacht.

In den Kernroutinen 12, 13, 14 der Schleife A wird überwacht bzw. festgelegt, nach welchen Kriterien 14 bzw. deren Kombinationen der Fehlerdetails die Meldung (bei 13) des Fehlers an die Warnlampe 10 weitergegeben wird und wann die Fehlerbehandlung (bei 12) wieder abgeschaltet werden kann.

So kann das Fehlersignal weitergegeben werden, wenn der Fehler über eine vorgegebene Wegstrecke X1 ständig vorlag. Entsprechend kann das Fehlersignal weitergegeben werden, wenn der Fehler über eine vorgegebene Zeitdauer X0 dauerhaft vorlag. Zudem kann das Fehlersignal weitergegeben werden, wenn der Fehler oft genug auftrat, d. h. der Fehlerzähler C einen bestimmten Wert X2 aufweist.

Die Parameter X0, X1 und X2 für diese Entscheidungen können so implementiert werden, dass es möglich ist, anhand von verschiedenen Kombinationen von C, D und T das Fehlersignal zu filtern. Zudem werden für jeden Fehler und den dazugehörigen Fehlercode unterschiedliche Vorgaben gespeichert.

Dies ist nachfolgend in der Tabelle 1 beispielhaft für einen Fehler mit dem Fehlercode 45 dargestellt:

**TABELLE 1**

| Name | Register | Wert |
|---|---|---|
| Zeit T | X0 | - |
| Weg D | X1 | 10 |
| Zähler C | X2 | 2 |

So würde der Fehler 45 erst nach einer Wegstrecke D von 10 km Fahrt bei aktivem Fehler oder einem zweimaligen Auftreten, d. h. einem Fehlerzählerwert C von 2, ein Leuchten der Warnlampe 10 bewirken. Die Tabelle 1 entspricht also den Kriterien 14 bzw. deren Kombinationen für die Desensibilisierung vor der Weitergabe des Signals bzw. Durchleitung des Signals zum Anschalten der Warnlampe 10.

Sind die Kriterien noch nicht erreicht, so liegt noch keine ausreichende Fehlerbestätigung vor und der Fehler führt noch nicht zum Anschalten der Warnlampe 10, der sogenannten Desensibilisierung.

Parallel zu der Schleife A wird immer überwacht, ob der Fehler noch aktiv ist bzw. vorliegt. Ist dies nicht der Fall, so wird nach bestimmten Parametern das Fehlersignal an die Warnlampe 10 bzw. diese abgeschaltet und die Schleife A verlassen und zum Startpunkt S gesprungen und etwaige Ersatzfunktionen zurückgenommen.

Als Parameter werden analog zu der obigen Überwachung hierzu in den Routinen 12 und 13 bzw. 14 die Fehlerdetails C, D und T herangezogen.

So kann das Fehlersignal deaktiviert werden, wenn über eine vorgegebene Wegstrecke X7 keine Zähleraktivität C vorlag, d. h. der Fehlerzähler C während einer bestimmten Fahrstrecke D nicht inkrementiert wurde. Entsprechend kann das Fehlersignal deaktiviert werden, wenn über eine vorgegebene Zeitdauer X8 keine Zähleraktivität C vorlag, d. h. der Fehlerzähler C während einer bestimmten Zeit T nicht inkrementiert wurde.

In der Schleife A wird daher in einer Routine 11 auch die seit dem Aufleuchten der Warnlampe und dem Nicht-Mehr-Vorliegen des Fehlers gefahrene Strecke D mitgezählt. Auch die entsprechende Zeit T, in der der Fehler nicht mehr vorlag, wird in der Routine 11 ebenfalls überwacht.

Die Parameter für diese Entscheidungen zum Ausschalten des Fehlersignals bzw. der Warnlampe 10 können so implementiert werden, dass es möglich ist, anhand von verschiedenen Kombinationen von C, D und T das Fehlersignal zu filtern. Zudem werden für jeden Fehler bzw. Fehlercode wiederum unterschiedliche Vorgaben gespeichert.

Dies ist nachfolgend in der Tabelle 2 beispielhaft für den Fehlercode 45 dargestellt:

**TABELLE 2**

| Name | Register | Wert |
|---|---|---|
| Zeit T | X7 | 300 |
| Weg D | X8 | 10 |

So würde das Fehlersignal des Fehlers 45 erst nach einer Wegstrecke D von 10 km Fahrt oder einer Zeitdauer von 300 Sekunden bei inaktivem Fehlerzähler C, d. h. ohne erneutes Auftreten also "Nicht-Vorliegen" des Fehlers, ein Wiederausschalten der Warnlampe 10 bewirken. Die Tabelle 2 entspricht also erweiterten Kriterien 14 bzw. deren Kombinationen. Die entsprechende Prüfung läuft in der Routine 13 ab. Sind die Vorgaben nicht erreicht, so beginnt die Schleife A einen erneuten Durchlauf bei der Routine 11.

Wie oben angedeutet, wird bei jedem Durchlauf der Schleife A auch eine Prüfung durchgeführt, ob eine weitere Überwachung notwendig oder ein Beenden der Überwachung möglich ist, d. h. ob die Fehlerbehandlung deaktiviert werden darf.

Dazu wird bei jedem Durchlauf der Schleife A in der Routine 12 und in der parallelen Routine 13 anhand der Werte der Fehlerdetails C, D und T entschieden, ob eine Kombination vorliegt, die eine weitere Überwachung notwendig macht oder die ein Beenden der Überwachung erlaubt.

Diese Überprüfung findet analog zu den übrigen Überwachungen statt, d. h. anhand der in dem Block 14 vorgegebenen Werten für die Fehlerdetails D, C und T. Mit anderen Worten, der aufgetretene Fehler wird nach dem Ausgeben der Warnung überwacht und zur Überwachung anhand der "nicht" Fehlerdetails ebenfalls desensibilisiert bzw. die Überwachung beendet und die Fehlerbehandlung zurückgesetzt.

Dazu kann die Fehlerfreiheit, d. h. es liegt kein Fehler vor, anhand der Wegstrecke X4 oder anhand der Zeitdauer X3 gefiltert werden, in der kein erneuter Fehler auftrat, also in der jeweils die Anzahl des Auftretens des Fehlers C nicht erhöht wurde.

Die Parameter für diese Entscheidungen zum Ausschalten der Fehlerbehandlung können wiederum so implementiert werden, dass es möglich ist, anhand von verschiedenen Kombinationen von C, D und T zu filtern. Zudem werden für jeden Fehlercode ebenfalls unterschiedliche Vorgaben gespeichert.

Dies ist nachfolgend in der Tabelle 3 wieder beispielhaft für den Fehlercode 45 dargestellt:

**TABELLE 3**

| Name | Register | Wert |
|---|---|---|
| Zeit T | X3 | 200 |
| Weg D | X4 | 50 |

So würde die Fehlerbehandlung des Fehlers 45 erst nach einer Wegstrecke D von 50 km Fahrt oder einer Zeitdauer von 200 Sekunden ohne erneutes Fehlerauftreten deaktiviert werden.

Die entsprechende Prüfung läuft in der Routine 12 ab. Sind die Vorgaben zur Beendigung der Fehlerbehandlung nicht erreicht, so beginnt die Schleife A einen erneuten Durchlauf bei der Routine 11.

Das Beenden (bei 15) der Fehlerbehandlung bewirkt ein Zurücksetzen der protokollierten Werte der Fahrtstrecke D und der Zeit T. Diese werden erst erneut protokolliert bzw. aufgezeichnet, wenn der Fehler wieder auftritt.

Nach dem jeweiligen An- bzw. Ausschalten der Warnlampe 10, der Fehlerlampe 8 oder dem Rücksetzen der Fehlerbehandlung (bei 15) springt das Verfahren zum Startpunkt S, um erneut zu beginnen bzw. weiter abzulaufen.

Ferner wird die Fehlerbehandlung bzw. Desensibilisierung beim Fahrzeugstart deaktiviert und erst beim erstmaligen Auftreten eines Fehlers erneut aktiviert.

Entsprechend wird die Fehlerbehandlung bei Start bzw. Neustart des Fahrzeugs ausgeschaltet bzw. zurückgesetzt. In diesem Fall wird auch der Fehlerzähler C zurückgesetzt.

## Patentansprüche

1. Verfahren zur Fehlerbehandlung in einem elektronischen Fahrzeugsteuersystem, insbesondere in einem Kraftfahrzeugautomatikgetriebe, mittels einer Onboard-Diagnoseeinrichtung,
- in der Istwerte von Sensoren mit Sollwerten verglichen werden,
- und beim Abweichen der Ist- von den Sollwerten über einen vorgegebenen Zeitraum hinaus ein Fehler angenommen wird, woraufhin
- Ersatzfunktionen aktiviert und/oder die Sensoren durch Ersatzsignale ersetzt und/oder Ersatzwerte berechnet werden und
- in einem Fehlerspeicher Fehlerdetails abgespeichert werden sowie
- eine Warnung ausgegeben wird,
**dadurch gekennzeichnet, dass**
vor dem Ausgeben der Warnung der auftretende Fehler desensibilisiert wird.

2. Verfahren nach Anspruch 1, **dadurch gekennzeichnet, dass** der auftretende Fehler zur Desensibilisierung derart gefiltert wird, dass nur bei einem tatsächlich relevanten Fehler eine Warnung ausgegeben wird.

3. Verfahren nach Anspruch 2, **dadurch gekennzeichnet, dass** der Fehler anhand der Fehlerdetails gefiltert wird.

4. Verfahren nach Anspruch 3, **dadurch gekennzeichnet, dass** der Fehler anhand der Zeitdauer gefiltert wird, in der der Fehler auftrat.

5. Verfahren nach Anspruch 3 oder 4, **dadurch gekennzeichnet, dass** der Fehler anhand der Wegstrecke gefiltert wird, in der der Fehler auftrat.

6. Verfahren nach einem der Ansprüche 3 bis 5, **dadurch gekennzeichnet, dass** der Fehler anhand der Anzahl des Auftretens gefiltert wird.

7. Verfahren nach einem der vorhergehenden Ansprüche, **dadurch gekennzeichnet, dass** der aufgetretene Fehler nach dem Ausgeben der Warnung überwacht und zur Überwachung anhand der Fehlerdetails derart desensibilisiert bzw. gefiltert wird, dass die Warnung erst zurückgenommen, wenn bestimmte Bedingungen erfüllt sind.

8. Verfahren nach Anspruch 7, **dadurch gekennzeichnet, dass** der Fehler anhand der Wegstrecke gefiltert wird, in der die Anzahl des Auftretens des Fehlers nicht erhöht wurde.

9. Verfahren nach Anspruch 7 oder 8, **dadurch gekennzeichnet, dass** der Fehler anhand der Zeitdauer gefiltert wird, in der die Anzahl des Auftretens des Fehlers nicht erhöht wurde.

10. Verfahren nach einem der vorhergehenden Ansprüche, **dadurch gekennzeichnet, dass** die Desensibilisierung zurückgesetzt wird, wenn in einer vorgegebenen Zeitdauer kein erneuter Fehler auftrat.

11. Verfahren nach einem der vorhergehenden Ansprüche, **dadurch gekennzeichnet, dass** die Desensibilisierung deaktiviert wird, wenn über eine vorgegebene Wegstrecke kein erneuter Fehler auftrat.

12. Verfahren nach einem der vorhergehenden Ansprüche, **dadurch gekennzeichnet, dass** die Desensibilisierung deaktiviert wird, wenn über eine vorgegebene Wegstrecke und/oder Zeitdauer die Anzahl des Auftretens des Fehlers nicht erhöht wurde.

13. Verfahren nach einem der vorhergehenden Ansprüche, **dadurch gekennzeichnet, dass** die Desensibilisierung beim Fahrzeugstart deaktiviert und beim erstmaligen Auftreten eines Fehlers aktiviert wird.

14. Verfahren nach einem der vorhergehenden Ansprüche, **dadurch gekennzeichnet, dass** die Parameter für die Desensibilisierung bzw. Filterung tabellarisch abgelegt sind.

15. Verfahren nach einem der vorhergehenden Ansprüche, **dadurch gekennzeichnet, dass** die Parameter für die Desensibilisierung bzw. Filterung fehlerabhängig abgelegt sind.

16. Verfahren nach einem der vorhergehenden Ansprüche, **dadurch gekennzeichnet, dass** abgasrelevante Fehler im vorliegenden Verfahren nicht desensibilisiert werden.

17. Elektronisches Fahrzeugsteuersystem in einem Kraftfahrzeug, das eine Fehlerbehandlung nach einem Verfahren gemäß der vorhergehenden Ansprüche durchführt.

18. Automatikgetriebe in einem Kraftfahrzeug mit einem elektronischen Fahrzeugsteuersystem nach Anspruch 17.
